# EUROPÄISCHE PATENTSCHRIFT

(11) **EP 4 491 472 B1**
(45) Veröffentlichungstag und Bekanntmachung des Hinweises auf die Patenterteilung: **28.01.2026**
(21) Anmeldenummer: 24176934.8
(22) Anmeldetag: 21.05.2024
(51) Int. Cl.: B60T 17/22, F16D 66/02

(54) **VERFAHREN ZUM BETREIBEN EINER BREMSANLAGE FÜR EIN KRAFTFAHRZEUG, ENTSPRECHENDE BREMSANLAGE FÜR EIN KRAFTFAHRZEUG SOWIE COMPUTERPROGRAMMPRODUKT**
METHOD FOR OPERATING A BRAKE SYSTEM FOR A MOTOR VEHICLE, CORRESPONDING BRAKE SYSTEM FOR A MOTOR VEHICLE AND COMPUTER PROGRAM PRODUCT
PROCÉDÉ DE FONCTIONNEMENT D'UN SYSTÈME DE FREINAGE POUR UN VÉHICULE AUTOMOBILE, SYSTÈME DE FREINAGE CORRESPONDANT POUR UN VÉHICULE AUTOMOBILE AINSI QUE PRODUIT PROGRAMME INFORMATIQUE

(30) Priorität: 11.07.2023 DE 102023118244
(43) Veröffentlichungstag der Anmeldung: 15.01.2025
(73) Patentinhaber: AUDI AG, 85057 Ingolstadt (DE)
(72) Erfinder: Brok, Tobias, 85092 Kösching (DE); Hanisch, Thomas, 91795 Dollnstein (DE)

(56) Entgegenhaltungen:
- DE-A1- 10 325 623
- DE-A1- 102014 119 024
- DE-B4- 102017 002 148
- US-A1- 2015 082 850

## Beschreibung

Die Erfindung betrifft ein Verfahren zum Betreiben einer Bremsanlage für ein Kraftfahrzeug, die eine Betriebsbremseinrichtung mit wenigstens einer Radbremse aufweist und ein an der Radbremse zum Erzeugen einer auf eine Bremsscheibe der Radbremse wirkenden Bremskraft anliegender Bremsdruck zumindest zeitweise in Abhängigkeit von einer Einstellung eines Bedienelements eingestellt wird. Die Erfindung betrifft weiterhin eine Bremsanlage für ein Kraftfahrzeug sowie ein Computerprogrammprodukt.

Aus dem Stand der Technik sind beispielsweise die Druckschriften DE 10 2014 119 024 A1 und EP 3 186 122 B1 bekannt. Diese beschreibt ein Verfahren zum Überwachen der Bremsleistung eines Fahrzeugs, wobei das Verfahren Folgendes beinhaltet: Bereitstellen eines Bremsüberwachungssystems, das zumindest einen Mikroprozessor an dem Fahrzeug aufweist, für zumindest einige Bremsereignisse, wobei das Bremsüberwachungssystem einen Bremsbedarf und eine Fahrzeugentschleunigung bestimmt; Differenzieren zwischen qualifizierenden Bremsereignissen und nicht qualifizierenden Bremsereignissen, beinhaltend das Bestimmen, dass ein Bremsereignis ein nicht qualifizierendes Ereignis ist, zumindest teilweise als Reaktion auf das Bestimmen, dass ein Abgabedruck für einen Zeitraum ausgeübt wird, der weniger als ein oder gleich einem Schwellenwert ist; Definieren eines Datensatzes von qualifizierenden Bremsereignissen, wobei jedes Bremsereignis in dem Datensatz einen bestimmten Bremsbedarf und eine bestimmte Fahrzeugentschleunigung beinhaltet; Anwenden eines Verfahrens der statistischen Entwicklungsanalyse auf den Datensatz, um eine gerade Linienentwicklung der Fahrzeugentschleunigung und des Bremsbedarfs zu bestimmen; Bereitstellen einer Referenz der Fahrzeugentschleunigung und des Bremsbedarfs; und Vergleichen von zumindest einem Entwicklungswert mit zumindest einem Referenzwert.

Es ist Aufgabe der Erfindung, ein Verfahren zum Betreiben einer Bremsanlage für ein Kraftfahrzeug vorzuschlagen, welches gegenüber bekannten Verfahren Vorteile aufweist, insbesondere das Einhalten eines Emissionsgrenzwerts sicherstellt.

Dies wird erfindungsgemäß mit einem Verfahren zum Betreiben einer Bremsanlage für ein Kraftfahrzeug mit den Merkmalen des Anspruchs 1 erreicht.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar. Das Verfahren dient dem Betreiben der Bremsanlage. Diese ist vorzugsweise Bestandteil des Kraftfahrzeugs, kann jedoch selbstverständlich auch separat von diesem vorliegen. Die Bremsanlage dient einem Bremsen des Kraftfahrzeugs, also einer Verzögerung beziehungsweise einer Reduzierung der Geschwindigkeit des Kraftfahrzeugs, insbesondere bis in den Stillstand, und/oder einem Festsetzen des Kraftfahrzeugs im Stillstand. Für ersteres weist die Bremsanlage die Betriebsbremseinrichtung auf, welche zumindest zeitweise an wenigstens einem Rad des Kraftfahrzeugs, bevorzugt an mehreren oder allen Rädern des Kraftfahrzeugs, die Bremskraft bewirkt. Diese Bremskraft kann auch als Betriebsbremskraft bezeichnet werden. Liegen die mehreren Räder vor, so ist das wenigstens eine Rad als Bestandteil dieser mehreren Räder anzusehen. Sofern im Rahmen dieser Beschreibung von dem Rad oder dem mindestens einen Rad gesprochen wird, so sind die Ausführungen äquivalent. Sie sind zudem vorzugsweise auf jedes der mehreren Räder übertragbar.

Das wenigstens eine Rad ist der Radachse des Kraftfahrzeugs zugeordnet, auf welche die Bremskraft mithilfe der Betriebsbremseinrichtung aufgebracht wird beziehungsweise an welcher die Bremskraft bewirkt wird. Die Radachse ist beispielsweise eine Hinterradachse oder eine Vorderradachse des Kraftfahrzeugs. Bevorzugt ist die Betriebsbremseinrichtung dazu vorgesehen und ausgestaltet, zumindest zeitweise die Bremskraft auf mehrere Räder der Radachse und/oder Räder mehrerer Radachsen aufzubringen. Besonders bevorzugt wird die Betriebsbremseinrichtung dazu verwendet, zumindest zeitweise auf mehrere oder alle Radachsen des Kraftfahrzeugs beziehungsweise deren Räder die Bremskraft aufzubringen beziehungsweise die entsprechenden Räder zu bremsen.

Die Betriebsbremseinrichtung verfügt über die wenigsten eine Radbremse, welche dem mindestens einen Rad beziehungsweise der mindestens einen Radachse zugeordnet ist. Vorzugsweise weist die Betriebsbremseinrichtung mehrere Radbremsen auf, wobei jede der Radbremsen einem Rad beziehungsweise einer Radachse des Kraftfahrzeugs zugeordnet ist. Besonders bevorzugt liegen die Radbremsen an mehreren Rädern und/oder Radachsen vor, insbesondere ist jedem Rad und/oder jeder Radachse des Kraftfahrzeugs eine separate Radbremse zugeordnet. Mittels der Radbremse wird die Bremskraft auf die Radachse beziehungsweise das jeweilige Rad des Kraftfahrzeugs aufgebracht. Unter der Bremskraft ist hierbei diejenige Kraft zu verstehen, welche auf die Bremsscheibe der Radbremse in ihrer Umfangsrichtung bezüglich einer Drehachse der Bremsscheibe ausgeübt wird, insbesondere mittels eines Bremssattels. Zum Bewirken der Bremskraft auf die Bremsscheibe drängt der Bremssattel einen oder mehrere Bremsbeläge an beziehungsweise auf die Bremsscheibe, nämlich in Abhängigkeit von dem an der Radbremse anliegenden Bremsdruck. Die Bremskraft ist insoweit vorzugsweise proportional oder zumindest näherungsweise proportional zu dem Bremsdruck.

Die mittels der Betriebsbremseinrichtung bewirkte Bremskraft kann üblicherweise beliebig eingestellt werden. Dies erfolgt in Abhängigkeit von der Einstellung des Bedienelements, über welches ein Fahrer des Kraftfahrzeugs die Bremskraft vorgibt. Das Bedienelement ist aus einem Fahrgastraum des Kraftfahrzeugs heraus von dem Fahrer erreichbar angeordnet, insbesondere liegt es zumindest bereichsweise in dem Fahrgastraum vor beziehungsweise ragt in diesen hinein. Das Bedienelement ist besonders bevorzugt als Bremspedal ausgestaltet, ist also zur Betätigung durch einen Fuß des Fahrers beziehungsweise zur Fußbetätigung durch den Fahrer vorgesehen und ausgestaltet.

Die Bremsanlage wertet die Einstellung des Bedienelements, beispielsweise seine Stellung, aus und ermittelt aus der Einstellung die von dem Fahrer vorgegebene Bremskraft. Diese kann auch als Vorgabebremskraft bezeichnet werden. Die Betriebsbremseinrichtung wird zumindest zeitweise derart angesteuert, dass sie auf die Radachse des Kraftfahrzeugs beziehungsweise das mindestens eine Rad die Bremskraft bewirkt, welche der Vorgabebremskraft entspricht. Insbesondere wird der Betriebsbremseinrichtung eine der Vorgabebremskraft entsprechende Sollbremskraft vorgegeben und diese stellt eine auf die Radachse beziehungsweise das mindestens eine Rad wirkende Istbremskraft derart ein, dass sie der Sollbremskraft und mithin der Vorgabebremskraft entspricht.

Die Betriebsbremseinrichtung ist beispielsweise zumindest zeitweise rein elektronisch an das Bedienelement angebunden, sodass das Ansteuern der Radbremse beziehungsweise der Radbremsen in Abhängigkeit von der Einstellung des Bedienelements zumindest zeitweise rein elektronisch vorgenommen wird. Es kann jedoch auch vorgesehen sein, dass zwischen dem Bedienelement und der Radbremse eine mechanische und/oder hydraulische Rückfallebene vorliegt, sodass bei einem Ausfall der elektronischen Anbindung mittels des Bedienelements dennoch die Bremskraft bewirkt beziehungsweise eingestellt werden kann. Besonders bevorzugt ist das Bedienelement permanent rein elektronisch an die Betriebsbremseinrichtung angebunden beziehungsweise umgekehrt die Betriebsbremseinrichtung permanent rein elektronisch an das Bedienelement angebunden.

Das Erzeugen der Bremskraft in Abhängigkeit von der Einstellung des Bedienelements wird von einem Steuergerät der Bremsanlage vorgenommen. Das Steuergerät wertet hierzu die Einstellung des Bedienelements aus, ermittelt die Bremskraft beziehungsweise die Vorgabebremskraft und steuert die Betriebsbremseinrichtung zum Erzeugen der Istbremskraft an, welche der Sollbremskraft beziehungsweise der Vorgabebremskraft entspricht. Hierzu wird die Einstellung des Bedienelements an das Steuergerät übermittelt, insbesondere über eine Datenübertragungsverbindung.

Bei dem Verwenden der Radbremse zum Erzeugen der Bremskraft tritt Abrieb auf, insbesondere der Bremsscheibe und/oder von an dem Bremssattel befestigten Bremsbelägen. Dieser Abrieb gelangt als Staub in die Außenumgebung des Kraftfahrzeugs, der Emissionen der Bremsanlage darstellt. Er beeinflusst also Gesamtemissionen des Kraftfahrzeugs, welche sich beispielsweise aus Emissionen einer Antriebseinrichtung des Kraftfahrzeugs und den Emissionen der Bremsanlage zusammensetzen. Um die Emissionen der Bremsanlage zu verringern, wird über unterschiedliche Maßnahmen nachgedacht. So ist es beispielsweise möglich, den Abrieb der Bremsscheibe und/oder der Bremsbeläge abzusaugen, insbesondere aus einem Radkasten des Kraftfahrzeugs, und mit einem Filter aus der abgesaugt Luft abzuscheiden. Dies ist jedoch aufwendig und erfordert zusätzliche Bauteile, welche Bauraum benötigen.

Aus diesem Grund soll gemäß der Erfindung die Bremsscheibe mit der Beschichtung versehen sein, welche emissionsverringernd ausgestaltet ist. Die Beschichtung sorgt also dafür, dass bei der Verwendung der Radbremse zum Bremsen beziehungsweise Verzögern des Kraftfahrzeugs weniger Abrieb anfällt als bei einer ohne die Beschichtung ausgestalteten Bremsscheibe, beispielsweise aus Grauguss. Während des Betriebs der Bremsanlage nutzt sich die Beschichtung jedoch ab, beispielsweise durch den weiterhin in verringertem Maßstab anfallenden Abrieb und/oder durch eine Beschädigung der Beschichtung. Eine Bremsscheibe mit einer abgenutzten Beschichtung bewirkt jedoch wiederum das Anfallen einer größeren Menge an Abrieb im Vergleich mit der die nicht abgenutzte Beschichtung aufweisenden Bremsscheibe.

Dies kann dazu führen, dass das Kraftfahrzeug während seines Betriebs Gesamtemissionen aufweist, welche höher sind als die eigentlich vorgesehenen Emissionen, also den Emissionsgrenzwert überschreiten. Es ist daher vorgesehen, den Zustand der Beschichtung zu überwachen. Hierzu wird der Zustand der Beschichtung aus dem an der Radbremse anliegenden Bremsdruck und der der aus den Bremsdruck resultierenden Verzögerung des Kraftfahrzeugs ermittelt. Während des Vorliegens der auf die Bremsscheibe der Radbremse wirkenden Bremskraft werden also der hierzu verwendete Bremsdruck und die bei Vorliegen des Bremsdrucks auftretende Verzögerung des Kraftfahrzeugs erfasst. Anschließend wird aus ihnen der Zustand der Beschichtung ermittelt; der Zustand der Beschichtung liegt also als Funktion des Bremsdrucks und der Verzögerung vor.

Anhand des Zustands wird es beurteilt, ob ein Fehler der Beschichtung vorliegt oder ob die Beschichtung in Ordnung ist. Beispielsweise ist zu diesem Zweck eine Druck-Verzögerungskennlinie hinterlegt, in welcher der für eine bestimmte Verzögerung notwendige Bremsdruck über die Verzögerung aufgetragen ist. Aufgrund der Beschichtung wird die Druck- /Verzögerungskennlinie üblicherweise flacher verlaufen als bei einer die Beschichtung nicht aufweisenden Bremsscheibe. Anhand des an der Radbremse anliegenden Bremsdrucks und der aus dieser resultierenden Verzögerung kann insoweit, beispielsweise unter Verwendung der Druck-/Verzögerungskennlinie, auf den Zustand der Beschichtung erkannt werden. Entspricht der Bremsdruck einem sich für die vorliegende Verzögerung des Kraftfahrzeugs aus der Druck-/Verzögerungskennlinie ergebenden Bremsdruck, so wird darauf erkannt, dass die Beschichtung in Ordnung ist.

Weicht er jedoch von diesem ab, insbesondere um mehr als eine festgelegte Toleranz, so wird auf den Fehler der Beschichtung erkannt. Ist dies der Fall, so wird bevorzugt ein Fehlersignal erzeugt und/oder der Fehler der Beschichtung dem Fahrer des Kraftfahrzeugs signalisiert, beispielsweise optisch, akustisch und/oder haptisch. In jedem Fall kann mit der beschriebenen Vorgehensweise sichergestellt werden, dass die Bremsanlage beziehungsweise das Kraftfahrzeug in bestimmungsgemäßem Rahmen betrieben wird, insbesondere unter Einhaltung von Grenzwerten für die Emissionen der Bremsanlage und/oder der Gesamtemissionen.

Eine Weiterbildung der Erfindung sieht vor, dass als Bremsscheibe eine durch Laserbeschichten mit der Beschichtung versehene Bremsscheibe verwendet wird. Die Bremsscheibe besteht aus einem Bremsscheibenmaterial, beispielsweise bewährter Weise aus Grauguss. Auf die Bremsscheibe ist die Beschichtung aufgetragen, wobei dies erfindungsgemäß durch laserbeschichten erfolgt. Die Beschichtung besteht aus einem Beschichtungsmaterial, welches vorzugweise von dem Bremsscheibenmaterial verschieden ist. Das Beschichtungsmaterial weist bevorzugt eine höhere Härte auf als das Bremsscheibenmaterial. Als Beschichtungsmaterial kommt beispielsweise ein Hartstoff zum Einsatz, sodass die Beschichtung auch als Hartstoffbeschichtung bezeichnet werden kann. Beispielsweise wird Wolframkarbid als Beschichtungsmaterial verwendet. Das Laserbeschichten erfolgt beispielsweise durch Laserpulverauftragsschweißen. Die Beschichtung wird vorzugsweise mit einer Beschichtungsdicke von höchstens 200 µm, höchstens 150 µm oder höchstens 100 µm hergestellt. Durch die Verwendung einer derartigen Bremsscheibe werden die Emissionen der Bremsanlage deutlich reduziert.

Eine Weiterbildung der Erfindung sieht vor, dass bei einer Abweichung der Verzögerung von einem für den Bremsdruck hinterlegten Verzögerungssollwert auf einen Fehler der Beschichtung erkannt wird. Hierauf wurde im Grunde bereits hingewiesen. Der Verzögerungssollwert ist in Abhängigkeit von dem Bremsdruck hinterlegten, nämlich in Form der Druck-/Verzögerungskennlinie. Diese setzt unterschiedliche Bremsdrücke in Beziehung zu der bei diesen jeweils auftretenden Verzögerungen. Weicht die nun tatsächlich vorliegende Verzögerung, welche auch als Istverzögerung bezeichnet werden kann, von dem Verzögerungssollwert ab, so kann davon ausgegangen werden, dass die Beschichtung den Fehler aufweist. Die Abweichung der Verzögerung von dem Verzögerungssollwert kann hierbei entweder in Richtung kleinerer Verzögerungen oder in Richtung größerer Verzögerungen vorliegen. Anders ausgedrückt wird nur dann darauf erkannt, dass die Beschichtung in Ordnung ist, falls die Verzögerung dem Verzögerungssollwert entspricht, insbesondere unter Berücksichtigung einer festgelegten Toleranz. Anderenfalls wird auf den Fehler der Beschichtung erkannt. Hierdurch ist eine zuverlässige Beurteilung des Zustands der Beschichtung umgesetzt.

Erfindungsgemäß, wird ein Fahrzeuggewicht des Kraftfahrzeugs ermittelt und anhand des Fahrzeuggewichts aus der Verzögerung des Kraftfahrzeugs eine auf das Kraftfahrzeug wirkende Verzögerungskraft berechnet wird. Die Verzögerung wird insoweit nicht unmittelbar zum Ermitteln des Zustands der Beschichtung herangezogen, sondern sie wird zunächst in die Verzögerungskraft umgerechnet. Unter der Verzögerungskraft ist diejenige Kraft zu verstehen, welche während der auf die Bremsscheibe wirkenden Bremskraft bremsend beziehungsweise verzögert auf das Kraftfahrzeug wirkt. Zur Berechnung der Verzögerungskraft wird das Fahrzeuggewicht des Kraftfahrzeugs herangezogen, insbesondere ergibt sich die Verzögerungskraft aus einer Multiplikation des Fahrzeuggewichts mit der Verzögerung. Das Fahrzeuggewicht wird üblicherweise ohnehin während des Betriebs der Bremsanlage ermittelt, nämlich beispielsweise durch Nutzung bekannter Zustandsgrößen des Kraftfahrzeugs, welche beispielsweise über den CAN-Bus bereitgestellt werden. Die Ermittlung der Verzögerungskraft ermöglicht das Bestimmen des Zustands der Beschichtung mit hoher Genauigkeit.

Erfindungsgemäß, wird anhand des Bremsdrucks und der Verzögerungskraft ein Reibungskoeffizient der Radbremse ermittelt. Sowohl der Bremsdruck als auch die Verzögerungskraft sind bekannt. Aus dem Bremsdruck wird hierbei insbesondere eine Anpresskraft bestimmt, mit welcher die Bremsbeläge an die Bremsscheibe gepresst werden. Aus dieser an Presskraft beziehungsweise den Bremsdruck einerseits und der Verzögerungskraft andererseits kann der an der Radbremse zwischen der Bremsscheibe und den Bremsbelägen vorliegende Reibungskoeffizient bestimmt werden. Anhand des Reibungskoeffizients kann wiederum mit hoher Genauigkeit der Zustand der Beschichtung ermittelt werden.

Die Erfindung sieht vor, dass bei einem Abweichen des Reibungskoeffizients von einem Koeffizientensollwert auf den Fehler der Beschichtung erkannt wird. Der Reibungskoeffizient wird auf die beschriebene Art und Weise ermittelt. Der Koeffizientensollwert ist für die Bremsscheibe beziehungsweise die Beschichtung hinterlegt, insbesondere in dem Steuergerät der Bremsanlage. Vorzugsweise wird bei einem Einbau der Bremsscheibe der Koeffizientensollwert für eine vollständig intakte Beschichtung hinterlegt. Weicht nachfolgend während des Betriebs der Bremsanlage der tatsächlich vorliegende Reibungskoeffizient von dem Koeffizientensollwert ab, so wird darauf geschlossen, dass die Beschichtung fehlerhaft ist. Anders ausgedrückt wird nur dann darauf erkannt, dass die Beschichtung in Ordnung ist, falls der Reibungskoeffizient dem hinterlegten Koeffizientensollwert entspricht, insbesondere unter Berücksichtigung einer festgelegten Toleranz. Weicht hingegen der Reibungskoeffizienten von dem Koeffizientensollwert ab, insbesondere um mehr als die festgelegte Toleranz, so wird auf den Fehler der Beschichtung erkannt. Hierdurch werden unzulässig hohe Emissionen der Bremsanlage zuverlässig erkannt und können mithin vermieden werden.

Eine Weiterbildung der Erfindung sieht vor, dass der Verzögerungssollwert und/oder der Koeffizientensollwert während eines Einfahrbetriebs der Bremsanlage ermittelt und hinterlegt werden. Der Einfahrbetriebs liegt nach einem Einbau der Bremsscheibe in die Bremsanlage beziehungsweise die Radbremse vor beziehungsweise wird mit diesem eingeleitet. Beispielsweise wird im Zuge des Einbaus der Bremsscheibe der bislang hinterlegte Sollwert gelöscht. Hierauf wird der Einfahrbetrieb eingeleitet. Dieser wird solange vorgenommen, bis die Verzögerung für unterschiedliche Bremsdrücke und/oder der Reibungskoeffizient zuverlässig ermittelt sind. Ist dies der Fall, werden sie als Verzögerungssollwert beziehungsweise als Koeffizientensollwert hinterlegt und nachfolgend zum Ermitteln des Zustands der Beschichtung herangezogen. Hierdurch wird die Bremsanlage zuverlässig auf die jeweils verbaute Bremsscheibe eingestellt.

Eine Weiterbildung der Erfindung sieht vor, dass erst bei einem mehrfachen Abweichen der Verzögerung von dem Verzögerungssollwert und/oder des Reibungskoeffizients von dem Koeffizientensollwert auf den Fehler der Beschichtung erkannt wird. Das Abweichen der Verzögerung beziehungsweise des Reibungskoeffizients wird nicht notwendigerweise von dem Fehler der Beschichtung bewirkt, sondern kann beispielsweise aufgrund von Umgebungsbedingungen des Kraftfahrzeugs auftreten. Insbesondere kann es vorkommen, dass Fremdstoffe zwischen der Bremsscheibe und den Bremsbelägen vorliegen, beispielsweise Wasser, Salz oder dergleichen. Aus diesem Grund wird nicht unmittelbar auf den Fehler der Beschichtung erkannt, sobald die Abweichung auftritt. Vielmehr ist es hierzu notwendig, dass das Abweichen mehrfach vorkommen, insbesondere mit bestimmten Mindestzeitabständen. So wird vorzugsweise lediglich dann auf den Fehler der Beschichtung erkannt, sofern das Abweichen mehrfach auftritt und zwischen einzelnen Abweichungen mindestens der bestimmte Zeitabstand vorliegt. Hierdurch wird ein fälschliches Erkennen auf den Fehler der Beschichtung zuverlässig vermieden.

Die Erfindung betrifft weiterhin eine Bremsanlage für ein Kraftfahrzeug, insbesondere zur Durchführung des Verfahrens gemäß den Ausführungen im Rahmen dieser Beschreibung, wobei die Bremsanlage eine Betriebsbremseinrichtung mit wenigstens einer Radbremse aufweist und dazu vorgesehen und ausgestaltet ist, einen an der Radbremse zum Erzeugen einer auf eine Bremsscheibe der Radbremse wirkenden Bremskraft anliegenden Bremsdruck zumindest zeitweise in Abhängigkeit von einer Einstellung eines Bedienelements einzustellen. Dabei ist die Bremsanlage weiter dazu vorgesehen und ausgestaltet, einen Zustand einer Beschichtung einer Bremsscheibe der Radbremse anhand des an der Radbremse anliegenden Bremsdrucks und einer aus diesem resultierenden Verzögerung des Kraftfahrzeugs zu ermitteln.

Auf die Vorteile einer derartigen Ausgestaltung der Bremsanlage beziehungsweise einer derartigen Vorgehensweise wurde bereits hingewiesen. Sowohl die Bremsanlage für das Kraftfahrzeug als auch das Verfahren zu ihrem Betreiben können gemäß den Ausführungen im Rahmen dieser Beschreibung weitergebildet sein, sodass insoweit auf diese verwiesen wird.

Zudem betrifft die Erfindung ein Computerprogrammprodukt, umfassend Befehle, die bewirken, dass die Bremsanlage für das Kraftfahrzeug gemäß den Ausführungen dieser Beschreibung das erläuterte Verfahren ausführt. Hinsichtlich der Vorteile und möglicher vorteilhafter Weiterbildungen wird in Gänze auf die Beschreibung verwiesen.

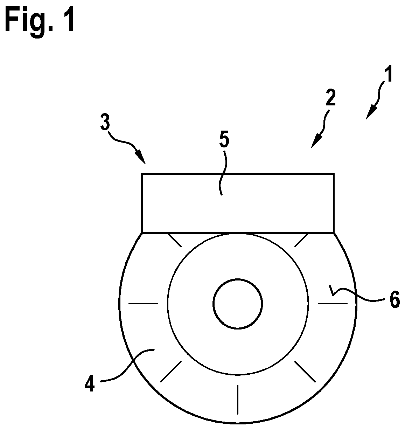

Die Erfindung wird nachfolgend anhand der in der Zeichnung dargestellten Ausführungsbeispiel näher erläutert, ohne dass eine Beschränkung der Erfindung erfolgt. Dabei zeigt die einzige
- Figur 1: eine schematische Darstellung eines Bereichs einer Bremsanlage für ein Kraftfahrzeug.

Die Figur 1 zeigt eine schematische Darstellung eines Bereichs einer Bremsanlage 1 für ein Kraftfahrzeug. Die Bremsanlage 1 verfügt über eine Betriebsbremseinrichtung 2, die wiederum eine hier dargestellte Radbremse 3 aufweist.. Die Radbremse 3 ist einem Rad des Kraftfahrzeugs beziehungsweise einer Radachse des Kraftfahrzeugs zugeordnet. Sie verfügt über eine Bremsscheibe 4 und einen Bremssattel 5, an welchem auf gegenüberliegenden Seiten der Bremsscheibe 4 hier nicht dargestellte Bremsbeläge angeordnet sind. Zum Erzeugen einer Bremskraft wird an der Radbremse 3 ein Bremsdruck angelegt. Hierdurch werden die Bremsbeläge von dem Bremssattel 5 an die Bremsscheibe 4 gedrängt, sodass aufgrund des Reibschlusses zwischen Bremsscheibe 4 und Bremsbelägen die Bremskraft vorliegt. Die Bremsscheibe 4 ist mit einer Beschichtung versehen, insbesondere aus einem Hartstoff, um einen während des Erzeugens der Bremskraft auftretenden Abrieb zu verringern.

Um zuverlässig für die Bremsanlage festgelegte Emissionsgrenzwerte einzuhalten, ist es notwendig, den Zustand der Beschichtung 6 zu überwachen. Hierzu werden der an der Radbremse 3 anliegende Bremsdruck sowie eine aus dem Bremsdruck resultierende Verzögerung des Kraftfahrzeugs herangezogen. In anderen Worten ergibt sich der Zustand der Beschichtung 6 als Funktion aus dem Bremsdruck und der Verzögerung des Kraftfahrzeugs, die mittels der Radbremse 3 erzielt wird. Beispielsweise wird hierzu eine in einem Steuergerät der Bremsanlage 1 hinterlegte Druck-/Verzögerungskennlinie herangezogen. Es kann jedoch auch vorgesehen sein, dass ein momentan vorliegender Reibungskoeffizient der Radbremse 3 beziehungsweise zwischen der Bremsscheibe 4 und den Bremsbelägen ermittelt und mit einem Sollwert verglichen wird. In jedem Fall wird zuverlässig auf den Zustand der Beschichtung 6 erkannt und insbesondere festgestellt, falls ein Fehler der Beschichtung 6 vorliegt. In diesem Fall wird bevorzugt ein Fehlersignal erzeugt und/oder der Fehler einem Fahrer des Kraftfahrzeugs angezeigt. Somit können die Emissionsgrenzwerte durch die Bremsanlage 1 zuverlässig eingehalten werden.

### BEZUGSZEICHENLISTE:

- 1: Bremsanlage
- 2: Betriebsbremseinrichtung
- 3: Radbremse
- 4: Bremsscheibe
- 5: Bremssattel
- 6: Beschichtung

## Patentansprüche

1. Verfahren zum Betreiben einer Bremsanlage (1) für ein Kraftfahrzeug, die eine Betriebsbremseinrichtung (2) mit wenigstens einer Radbremse (3) aufweist und ein an der Radbremse (3) zum Erzeugen einer auf eine Bremsscheibe (4) der Radbremse (3) wirkenden Bremskraft anliegender Bremsdruck zumindest zeitweise in Abhängigkeit von einer Einstellung eines Bedienelements eingestellt wird, wobei ein Zustand einer Beschichtung (6) einer Bremsscheibe (4) der Radbremse (3) anhand des an der Radbremse (3) anliegenden Bremsdrucks und einer aus diesem resultierenden Verzögerung des Kraftfahrzeugs ermittelt wird, wobei ein Fahrzeuggewicht des Kraftfahrzeugs ermittelt und anhand des Fahrzeuggewichts aus der Verzögerung des Kraftfahrzeugs eine auf das Kraftfahrzeug wirkende Verzögerungskraft berechnet wird, **dadurch gekennzeichnet, dass** anhand des Bremsdrucks und der Verzögerungskraft ein Reibungskoeffizient der Radbremse (3) ermittelt und bei einem Abweichen des Reibungskoeffizients von einem Koeffizientensollwert auf einen Fehler der Beschichtung (6) erkannt wird.

2. Verfahren nach Anspruch 1, **dadurch gekennzeichnet, dass** als Bremsscheibe (4) eine durch Laserbeschichten mit der Beschichtung (6) versehene Bremsscheibe (4) verwendet wird.

3. Verfahren nach einem der vorhergehenden Ansprüche, **dadurch gekennzeichnet, dass** bei einer Abweichung der Verzögerung von einem für den Bremsdruck hinterlegten Verzögerungssollwert auf einen Fehler der Beschichtung (6) erkannt wird.

4. Verfahren nach Anspruch 1 oder 2, **dadurch gekennzeichnet, dass** der Verzögerungssollwert und/oder der Koeffizientensollwert während eines Einfahrbetriebs der Bremsanlage (1) ermittelt und hinterlegt werden.

5. Verfahren nach Anspruch 1 oder 2, **dadurch gekennzeichnet, dass** erst bei einem mehrfachen Abweichen der Verzögerung von dem Verzögerungssollwert und/oder des Reibungskoeffizients von dem Koeffizientensollwert auf den Fehler der Beschichtung (6) erkannt wird.

6. Bremsanlage (1) für ein Kraftfahrzeug, insbesondere zur Durchführung des Verfahrens nach einem oder mehreren der vorhergehenden Ansprüche, wobei die Bremsanlage (1) eine Betriebsbremseinrichtung (2) mit wenigstens einer Radbremse (3) aufweist und dazu vorgesehen und ausgestaltet ist, einen an der Radbremse (3) zum Erzeugen einer auf eine Bremsscheibe (4) der Radbremse (3) wirkenden Bremskraft anliegenden Bremsdruck zumindest zeitweise in Abhängigkeit von einer Einstellung eines Bedienelements einzustellen, wobei die Bremsanlage (1) weiter dazu vorgesehen und ausgestaltet ist, einen Zustand einer Beschichtung (6) einer Bremsscheibe (4) der Radbremse (3) anhand des an der Radbremse (3) anliegenden Bremsdrucks und einer aus diesem resultierenden Verzögerung des Kraftfahrzeugs zu ermitteln, wobei ein Fahrzeuggewicht des Kraftfahrzeugs ermittelt und anhand des Fahrzeuggewichts aus der Verzögerung des Kraftfahrzeugs eine auf das Kraftfahrzeug wirkende Verzögerungskraft berechnet wird, **dadurch gekennzeichnet, dass** anhand des Bremsdrucks und der Verzögerungskraft ein Reibungskoeffizient der Radbremse (3) ermittelt und bei einem Abweichen des Reibungskoeffizients von einem Koeffizientensollwert auf den Fehler der Beschichtung (6) erkannt wird.

7. Computerprogrammprodukt, umfassend Befehle, die, wenn von einem Computer ausgeführt, bewirken, dass die Bremsanlage (1) nach Anspruch 6 das Verfahren nach einem oder mehreren der Ansprüche 1 bis 5 ausführt.

## Claims

1. Method for operating a braking system (1) for a motor vehicle having a service braking apparatus (2) with at least one wheel brake (3) and a brake pressure acting on the wheel brake (3) for generating a braking force acting on a brake disc (4) of the wheel brake (3) at least temporarily, as a function of a setting an operating element, wherein a state of a coating (6) of a brake disc (4) of the wheel brake (3) is determined on the basis of the brake pressure applied to the wheel brake (3) and a deceleration resulting from this of the motor vehicle, wherein a vehicle weight of the motor vehicle is determined and, on the basis of the vehicle weight, a deceleration force acting on the motor vehicle is calculated from the deceleration of the motor vehicle, **characterized in that** a friction coefficient of the wheel brake (3) is determined on the basis of the brake pressure and the deceleration force, and if the friction coefficient deviates from a coefficient setpoint, a defect in the coating (6) is detected.

2. Method according to claim 1, **characterized in that**a brake disc (4) provided with the coating (6) by laser coating is used as the brake disc (4).

3. Method according to any one of the preceding claims, **characterized in that** if the deceleration deviates from a deceleration setpoint stored for the brake pressure, a defect in the coating (6) is detected.

4. Method according to claim 1 or 2, **characterized in that** the deceleration setpoint and/or the coefficient setpoint are determined and stored during a running-in operation of the brake system (1).

5. Method according to claim 1 or 2, **characterized in that** the defect in the coating (6) is only detected when the deceleration deviates from the deceleration setpoint and/or the friction coefficient deviates from the coefficient setpoint multiple times.

6. Braking system (1) for a motor vehicle, in particular for performing the method according to one or more of the preceding claims, wherein the braking system (1) has a service braking apparatus (2) with at least one wheel brake (3) and is provided and configured to adjust a braking pressure applied to the wheel brake (3) for generating a braking force acting on a brake disc (4) of the wheel brake (3) at least temporarily, as a function of a setting of an operating element, wherein the brake system (1) is further provided and configured to determine a state of a coating (6) of a brake disc (4) of the wheel brake (3) on the basis of the brake pressure applied to the wheel brake (3) and a deceleration resulting from this of the motor vehicle, wherein a vehicle weight of the motor vehicle is determined and, on the basis of the vehicle weight, a deceleration force acting on the motor vehicle is calculated from the deceleration of the motor vehicle, **characterized in that** a friction coefficient of the wheel brake (3) is determined on the basis of the brake pressure and the deceleration force, and if the friction coefficient deviates from a coefficient setpoint, the defect in the coating (6) is detected.

7. Computer program product comprising commands, which, when executed by a computer, cause the braking system (1) according to claim 6 to carry out the method according to one or more of claims 1 to 5.

## Revendications

1. Procédé de fonctionnement d'une installation de freinage (1) pour un véhicule automobile qui présente un dispositif de frein de service (2) avec au moins un frein de roue (3) et une pression de freinage appliquée au frein de roue (3) pour la génération d'une force de freinage agissant sur un disque de frein (4) du frein de roue (3) est réglée au moins temporairement en fonction d'un réglage d'un élément de commande, dans lequel un état d'un revêtement (6) d'un disque de frein (4) du frein de roue (3) est déterminé à l'aide de la pression de freinage appliquée au frein de roue (3) et d'un ralentissement en résultant du véhicule automobile, dans lequel un poids du véhicule automobile est déterminé et une force de ralentissement agissant sur le véhicule automobile est calculée à l'aide du poids du véhicule à partir du ralentissement du véhicule automobile, **caractérisé en ce**qu'un coefficient de friction du frein de roue (3) est déterminé à l'aide de la pression de freinage et de la force de ralentissement et en cas d'écart du coefficient de friction par rapport à une valeur de consigne de coefficient, un défaut du revêtement (6) est détecté.

2. Procédé selon la revendication 1, **caractérisé en ce**qu'un disque de frein (4) pourvu du revêtement (6) par revêtement laser est utilisé comme disque de frein (4).

3. Procédé selon l'une quelconque des revendications précédentes, **caractérisé en** cequ'en cas d'écart du ralentissement par rapport à une valeur de consigne de ralentissement enregistrée pour la pression de freinage, un défaut du revêtement (6) est détecté.

4. Procédé selon la revendication 1 ou 2, **caractérisé en ce**que la valeur de consigne de ralentissement et/ou la valeur de consigne de coefficient sont déterminées et enregistrées pendant un mode de mise en route de l'installation de freinage (1).

5. Procédé selon la revendication 1 ou 2, **caractérisé en ce**que seulement en cas d'écarts multiples du ralentissement par rapport à la valeur de consigne de ralentissement et/ou du coefficient de friction par rapport à la valeur de consigne de coefficient, un défaut du revêtement (6) est détecté.

6. Installation de freinage (1) pour un véhicule automobile, en particulier pour la mise en œuvre du procédé selon l'une ou plusieurs quelconques des revendications précédentes, dans laquelle l'installation de freinage (1) présente un dispositif de frein de service (2) avec au moins un frein de roue (3) et est prévue et configurée afin de régler une pression de freinage appliquée sur le frein de roue (3) pour la génération d'une force de freinage agissant sur un disque de frein (4) du frein de roue (3) au moins temporairement en fonction d'un réglage d'un élément de commande, dans laquelle l'installation de freinage (1) est en outre prévue et configurée afin de déterminer un état d'un revêtement (6) d'un disque de frein (4) du frein de roue (3) à l'aide de la pression de freinage appliquée sur le frein de roue (3) et d'un ralentissement en résultant du véhicule automobile, dans laquelle un poids du véhicule automobile est déterminé et une force de ralentissement agissant sur le véhicule automobile est calculée à l'aide du poids du véhicule à partir du ralentissement du véhicule automobile, **caractérisée en** cequ'un coefficient de friction du frein de roue (3) est déterminé à l'aide de la pression de freinage et de la force de ralentissement et en cas d'écart du coefficient de friction par rapport à une valeur de consigne de coefficient, un défaut du revêtement (6) est détecté.

7. Produit de programme informatique comprenant des ordres qui amènent, lors de l'exécution par un ordinateur, l'installation de freinage (1) selon la revendication 6 à exécuter le procédé selon l'une ou plusieurs quelconques des revendications 1 à 5.
